# EUROPEAN PATENT APPLICATION

(11) **EP 4 571 552 A2**
(43) Date of publication of application: **18.06.2025**
(21) Application number: 25173063.6
(22) Date of filing: 29.04.2025
(51) Int. Cl.: G06F 21/57, G06F 21/71

(54) **FUNCTIONAL SAFETY PROTECTION CIRCUIT, CHIP, FUNCTIONAL SAFETY PROTECTION METHOD, AND MEDIUM**

(30) Priority: 30.04.2024 CN 202410543740
(71) Applicant: Beijing Horizon Information Technology Co., Ltd., Beijing 100094 (CN)
(72) Inventor: HE, Yibo, Beijing 100094 (CN); DING, Jinnan, Beijing 100094 (CN); XIAO, Lei, Beijing 100094 (CN)
(74) Representative: v. Bezold & Partner Patentanwälte - PartG mbB

(57) **Abstract**

Disclosed are a functional safety protection circuit, a chip, a functional safety protection method, and a medium. The functional safety protection circuit includes: a configuration module, where the configuration module is configured to obtain a first configuration instruction and a reference check code associated with the first configuration instruction; a protected module, where the protected module is configured to generate first target information based on the first configuration instruction; a check operation module, where the check operation module is configured to perform a preset check operation on the first target information to obtain a target check code associated with the first configuration instruction; and a functional safety detection module, where the functional safety detection module is configured to determine a first functional safety detection result of the protected module based on the reference check code and the target check code.

## Description

### FIELD OF THE INVENTION

This disclosure relates to functional safety technologies, and in particular, to a functional safety protection circuit, a chip, a functional safety protection method, and a medium.

### BACKGROUND OF THE INVENTION

In a chip, there are some modules for which functional safety protection needs to be performed. Performing functional safety protection for these modules is beneficial for ensuring reliability of the chip. How to implement functional safety protection for these modules is an issue worthy of attention for a person skilled in the art.

### SUMMARY OF THE INVENTION

To resolve the foregoing technical problem, this disclose provides a functional safety protection circuit, a chip, a functional safety protection method, and a medium.

According to an aspect of an embodiment of this disclosure, a functional safety protection circuit is provided, including:
a configuration module, wherein the configuration module is configured to obtain a first configuration instruction and a reference check code associated with the first configuration instruction;
a protected module, wherein the protected module is configured to generate first target information based on the first configuration instruction;
a check operation module, wherein the check operation module is configured to perform a preset check operation on the first target information to obtain a target check code associated with the first configuration instruction; and
a functional safety detection module, where the functional safety detection module is configured to determine a first functional safety detection result of the protected module based on the reference check code and the target check code.
According to another aspect of an embodiment of this disclosure, a chip is provided, including the functional safety protection circuit described above.
According to still another aspect of an embodiment of this disclosure, a functional safety protection method is provided, including:
   obtaining a first configuration instruction and a reference check code associated with the first configuration instruction;
   calling a protected module to generate first target information based on the first configuration instruction;
   performing a preset check operation on the first target information to obtain a target check code associated with the first configuration instruction; and
   determining a first functional safety detection result of the protected module based on the reference check code and the target check code.

According to yet another aspect of an embodiment of this disclosure, a computer readable storage medium is provided, where the storage medium stores a computer program, and the computer program is used for implementing the functional safety protection method that is described above.

According to a still yet another aspect of an embodiment of this disclosure, an electronic device is provided, where the electronic device includes:
a processor; and
a memory, configured to store processor-executable instructions, where
the processor is configured to read the executable instructions from the memory, and execute the instructions to implement the functional safety protection method that is described above.

According to a further aspect of an embodiment of this disclosure, a computer program product is provided. When instructions in the computer program product are executed by a processor, the functional safety protection method described above is implemented.

Based on the functional safety protection circuit, the chip, the functional safety protection method, the medium, the electronic device, and the product that are provided in the foregoing embodiments of this disclosure, the reference check code obtained by the configuration module and the target check code obtained by the check operation module are both associated with the first configuration instruction, and have a same generation principle. Theoretically, the reference check code needs to be kept consistent with the target check code. The functional safety detection module may verify whether the reference check code is actually consistent with the target check code. Whether the protected module has a functional abnormality may be determined based on whether a theoretical situation matches an actual situation. Thus, the first functional safety detection result is obtained. For example, if the theoretical situation does not match the actual situation, it may be determined that the protected module has a functional abnormality. For another example, if the theoretical situation matches the actual situation, it may be determined that the protected module has no functional abnormalities. Therefore, according to the embodiments of this disclosure, through collaborative work of the configuration module, the protected module, the check operation module, and the functional safety detection module, the functional abnormality of the protected module can be detected by using a relatively simple circuit structure with relatively small area overhead and power consumption, thereby implementing functional safety protection for the protected module.

### BRIEF DESCRIPTION OF THE DRAWINGS

FIG. 1 is a schematic diagram of a structure of a functional safety protection circuit according to some exemplary embodiments of this disclosure;
FIG. 2 is a schematic diagram of a structure of a functional safety protection circuit according to some other exemplary embodiments of this disclosure;
FIG. 3 is a schematic diagram of a structure of a functional safety detection module according to some exemplary embodiments of this disclosure;
FIG. 4 is a schematic diagram of a structure of a protected module according to some exemplary embodiments of this disclosure;
FIG. 5 is a schematic flowchart of a functional safety protection method according to some exemplary embodiments of this disclosure;
FIG. 6 is a schematic flowchart of a method for generating first target information according to some other exemplary embodiments of this disclosure;
FIG. 7 is a schematic flowchart of a functional safety protection method according to some other exemplary embodiments of this disclosure;
FIG. 8 is a schematic diagram of implementing functional safety protection for a protected module according to some exemplary embodiments of this disclosure; and
FIG. 9 is a diagram of a structure of an electronic device according to some exemplary embodiment of this disclosure.

### DETAILED DESCRIPTION OF THE EMBODIMENTS

To explain this disclosure, exemplary embodiments of this disclosure are described below in detail with reference to accompanying drawings. Obviously, the described embodiments are merely a part, rather than all of embodiments of this disclosure. It should be understood that this disclosure is not limited by the exemplary embodiments.

It should be noted that unless otherwise specified, the scope of this disclosure is not limited by relative arrangement, numeric expressions, and numerical values of components and steps described in these embodiments.

### Application overview

In a chip, there are some modules for which functional safety protection needs to be performed. For example, there is an address generation unit (AGU) that requires functional safety protection in an intelligent driving chip. For ease of description, a module that requires functional safety protection may be referred to as a protected module below for short.

During operation of the protected module, a functional abnormality may occur to the protected module due to factors such as process and environment. For example, if there is electromagnetic interference in an environment, a functional abnormality may occur to the protected module. If the functional abnormality in the protected module cannot be detected in a timely manner, adverse effects may be brought to reliability of the protected module and even the chip. Therefore, it is necessary to take certain measures to perform functional safety detection on the functional abnormality that occurs to the protected module.

### Exemplary circuit

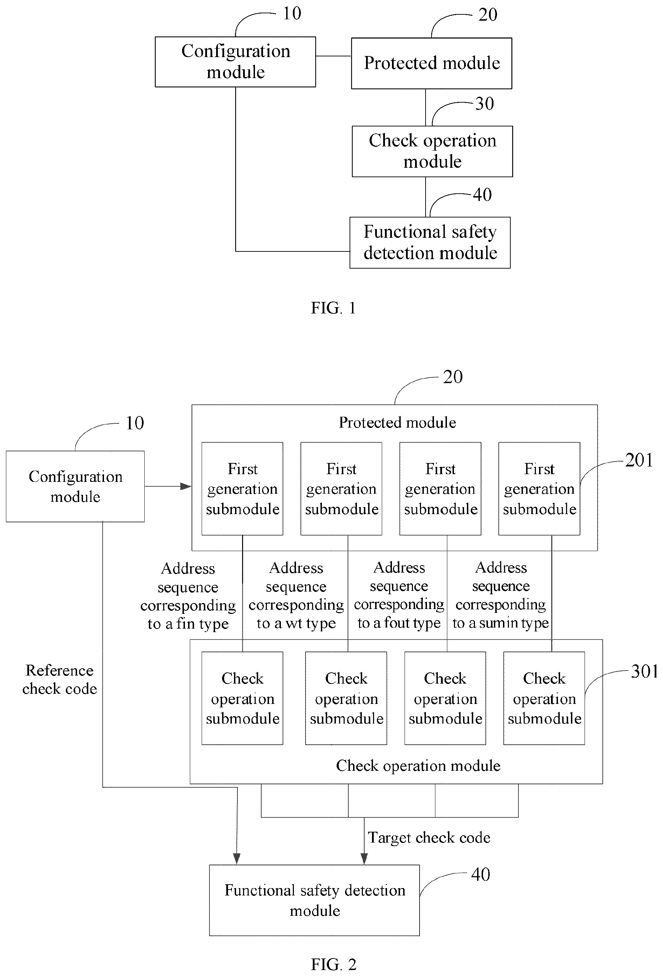

FIG. 1 is a schematic diagram of a structure of a functional safety protection circuit according to some exemplary embodiments of this disclosure. As shown in FIG. 1, the functional safety protection circuit may include:
a configuration module 10, wherein the configuration module 10 is configured to obtain a first configuration instruction and a reference check code associated with the first configuration instruction;
a protected module 20, wherein the protected module 20 is configured to generate first target information based on the first configuration instruction;
a check operation module 30, wherein the check operation module 30 is configured to perform a preset check operation on the first target information to obtain a target check code associated with the first configuration instruction; and
a functional safety detection module 40, wherein the functional safety detection module 40 is configured to determine a first functional safety detection result of the protected module 20 based on the reference check code and the target check code.

Optionally, the configuration module 10 may be a module used for providing configuration instructions and/or check codes to other modules. The configuration instructions provided by the configuration module 10 to other modules may be generated by a compiler. The check codes provided by the configuration module 10 to other modules may be generated by a software module. The configuration module 10 may also be referred to as a cfg module.

Optionally, the protected module 20 may be a module that requires functional safety protection. The protected module 20 may have the following target characteristics: The protected module 20 is configured to generate a specific type of information, and the generation of the information depends only on the configuration instructions, or only on the configuration instructions and a generation rule pre-built in the protected module 20. The generation of the information has no data dependency. For example, the generation of the information does not need to rely on data in an on-chip memory such as a static random access memory (SRAM). In an example, the protected module 20 may be an address generation unit, and the specific type of information generated by the protected module 20 may be address information. In another example, the protected module 20 may be an address index generation module, and the specific type of information generated by the address index generation module may be address index information, which may be understood as index information used to determine the address information. Certainly, types of the protected module 20 are not limited thereto, provided that it is ensured that the protected module 20 has the target characteristics, which are not enumerated herein.

Optionally, the check operation module 30 may be a module used to perform a preset check operation. The preset check operation may include but is not limited to a cyclic redundancy check (CRC) operation or a hash operation.

Optionally, the software module described above may include a first sub-software module and a second sub-software module. A function of the first sub-software module is similar to that of the protected module 20, for generating a specific type of information. A function of the second sub-software module is similar to that of the check operation module 30, for performing a preset check operation.

Optionally, the functional safety detection module 40 may be a module used to detect a functional abnormality of the protected module 20. The functional safety detection module 40 may include several comparators (CMP).

In embodiments of this disclosure, the protected module 20 may be electrically connected to the configuration module 10, the check operation module 30 may be electrically connected to the protected module 20, the functional safety detection module 40 may be electrically connected to the check operation module 30, and the functional safety detection module 40 may also be electrically connected to the configuration module 10.

The configuration module 10 may be configured to obtain the first configuration instruction generated for the protected module 20 by the compiler, and obtain the reference check code that is generated by the software module and is associated with the first configuration instruction. The configuration module 10 may transmit the first configuration instruction to the protected module 20, and may transmit the reference check code to the functional safety detection module 40.

The protected module 20 may generate the first target information based on the first configuration instruction. For example, the first configuration instruction may carry a first basic parameter for guiding information generation, and a generation rule may be pre-built in the protected module 20. The protected module 20 may generate the specific type of information based on the first basic parameter carried in the first configuration instruction and the generation rule built in the protected module 20, so as to obtain the first target information. For another example, the first configuration instruction may carry the first basic parameter for guiding information generation and a generation mode, and a correspondence between the generation mode and the generation rule may be pre-stored in the protected module 20. The protected module 20 may determine the generation rule corresponding to the generation mode carried in the first configuration instruction based on the pre-stored correspondence, and generate the specific type of information based on the first basic parameter carried in the first configuration instruction and the generation rule corresponding to the generation mode carried in the first configuration instruction, so as to obtain the first target information. The protected module 20 may transmit the first target information to the check operation module 30.

The check operation module 30 may perform a preset check operation on the first target information to obtain a corresponding check code. The obtained check code may be used as the target check code associated with the first configuration instruction. The check operation module 30 may transmit the target check code to the functional safety detection module 40.

It should be noted that the software module described above may generate the reference check code associated with the first configuration instruction by calling the first sub-software module to generate the specific type of information based on the first configuration instruction, and calling the second sub-software module to perform the preset check operation on the specific type of information generated by the first sub-software module to obtain the reference check code associated with the first configuration instruction. The manner for the first sub-software module to generate the specific type of information based on the first configuration instructions may be similar to that for the protected module 20 to generate the first target information based on the first configuration instruction. The manner for the second sub-software module to perform the preset check operation on the specific type of information generated by the first sub-software module may be similar to that for the check operation module 30 to perform the preset check operation on the first target information.

The functional safety detection module 40 may receive both the reference check code from the configuration module 10 and the target check code from the check operation module 30, and may determine the first functional safety detection result of the protected module 20 based on the reference check code and the target check code. Optionally, the functional safety detection module 40 may determine the first functional safety detection result based on whether the reference check code is consistent with the target check code. The first functional safety detection result may be used to indicate whether the protected module 20 has a functional abnormality. In some embodiments, the first functional safety detection result may also be used to indicate a specific component with a functional abnormality in the protected module 20.

In the embodiments of this disclosure, the reference check code obtained by the configuration module 10 and the target check code obtained by the check operation module 30 are both associated with the first configuration instruction, and have a same generation principle. Theoretically, the reference check code needs to be kept consistent with the target check code. The functional safety detection module 40 may verify whether the reference check code is actually consistent with the target check code. Whether the protected module 20 has a functional abnormality may be determined based on whether a theoretical situation matches an actual situation. Thus, the first functional safety detection result is obtained. For example, if the theoretical situation does not match the actual situation, it may be determined that the protected module 20 has a functional abnormality. For another example, if the theoretical situation matches the actual situation, it may be determined that the protected module 20 has no functional abnormalities. Therefore, according to the embodiments of this disclosure, through collaborative work of the configuration module 10, the protected module 20, the check operation module 30, and the functional safety detection module 40, the functional abnormality of the protected module 20 can be detected by using a relatively simple circuit structure with relatively small area overhead and power consumption, thereby implementing functional safety protection for the protected module 20.

In some optional examples, the reference check code associated with the first configuration instruction may include reference check codes respectively corresponding to a plurality of preset data types.

That the protected module 20 is configured to generate first target information based on the first configuration instruction includes that:
the protected module 20 is configured to determine configuration information respectively corresponding to the plurality of preset data types based on the first configuration instruction, and generate the first target information respectively corresponding to the plurality of preset data types based on the configuration information respectively corresponding to the plurality of preset data types.

Optionally, the first configuration instruction may carry the configuration information respectively corresponding to the plurality of preset data types. The protected module 20 may extract the configuration information respectively corresponding to the plurality of preset data types from the first configuration instruction, so as to generate the first target information respectively corresponding to the plurality of preset data types.

In some optional implementations of this disclosure, the protected module 20 may be an address generation unit, and the plurality of preset data types include at least two of a type of input feature data, a type of input weight data, a type of output feature data, and a type of residual data. That the protected module 20 is configured to generate the first target information respectively corresponding to the plurality of preset data types based on the configuration information respectively corresponding to the plurality of preset data types may include that:
the address generation unit is configured to generate corresponding address sequences respectively for the plurality of preset data types based on the configuration information respectively corresponding to the plurality of preset data types, wherein generation rules of the various address sequences are different from each other.

Optionally, the type of the input feature data may also be referred to as a fin type, the type of the input weight data may also be referred to as a wt type, the type of the output feature data may also be referred to as a fout type, and the type of the residual data may also be referred to as a sumin type.

Assuming that the plurality of preset data types include the fin type, the wt type, the fout type, and the sumin type, a first generation rule corresponding to the fin type, a second generation rule corresponding to the wt type, a third generation rule corresponding to the fout type, and a fourth generation rule corresponding to the sumin type may be pre-built in the address generation unit. The first generation rule, the second generation rule, the third generation rule, and the fourth generation rule may be different form each other pairwise.

In specific implementation, the address generation unit may generate the address sequence corresponding to the fin type based on the configuration information corresponding to the fin type and according to the first generation rule. This address sequence may be used as the first target information corresponding to the fin type. Optionally, the configuration information corresponding to the fin type may include a first basic parameter corresponding to the fin type, which may include a start address and an offset. The first generation rule may be: Generated addresses are incremented, and a difference between two adjacent addresses is the offset. In this case, if the start address in the first basic parameter corresponding to the fin type is 0 and the offset is 10, the address sequence corresponding to the fin type is: 0, 10, 20, 30, 40, 50, 60, .... Certainly, the first generation rule is not limited thereto, and may be set to other more complex rules according to actual requirements. This is not limited in this disclosure.

Similarly, the address generation unit may also generate the address sequence corresponding to the wt type based on the configuration information corresponding to the wt type and according to the second generation rule. This address sequence may be used as the first target information corresponding to the wt type. The address generation unit may also generate the address sequence corresponding to the fout type based on the configuration information corresponding to the fout type and according to the third generation rule. This address sequence may be used as the first target information corresponding to the fout type. The address generation unit may also generate the address sequence corresponding to the sumin type based on the configuration information corresponding to the sumin type and according to the fourth generation rule. This address sequence may be used as the first target information corresponding to the sumin type. It may be easily learned that based on the first configuration instruction, the address generation unit may generate a total of four address sequences, each of which serves as a piece of first target information. In other words, the specific type of information described above may be address information.

Optionally, the chip on which the functional safety protection circuit is located may include a data access and storage module, an on-chip memory, and a calculation array. The data access and storage module may be electrically connected to the address generation unit, the data access and storage module may also be electrically connected to the on-chip memory, and the calculation array may be electrically connected to the data access and storage module. The address generation unit may transmit all the four address sequences to the data access and storage module.

The data access and storage module may read the on-chip memory based on the address sequence corresponding to the fin type, to obtain the input feature data. The input feature data may be an image or a feature map. Each address in the address sequence corresponding to the fin type may be an address corresponding to one input point in the input feature data.

The data access and storage module may also read the on-chip memory based on the address sequence corresponding to the wt type, to obtain the input weight data. The input weight data may be a convolution kernel. Each address in the address sequence corresponding to the wt type may be an address of one weight value in the input weight data.

The data access and storage module may also read the on-chip memory based on the address sequence corresponding to the sumin type, to obtain the residual data. Each address in the address sequence corresponding to the sumin type may be an address of one residual value in the residual data.

The data access and storage module may transmit the input feature data, the input weight data, and the residual data to the calculation array. If it is assumed that the input feature data is represented by using F1, the input weight data is represented by using W, and the residual data is represented by using S, the calculation array may perform calculation according to the following formula to obtain F2 that is used as the output feature data, wherein it is satisfied that F2= F1*W+S. The output feature data may be a feature map.

The data access and storage module may also write F2 that is used as the output feature data to the on-chip memory based on the address sequence corresponding to the fout type. Each address in the address sequence corresponding to the fout type may be an address corresponding to one output point in F2 that is used as the output feature data.

In this way, calculation logic reflected in the foregoing formula for obtaining F2 can be implemented through collaborative work of the address generation unit, the data access and storage module, the on-chip memory, and the calculation array.

In some embodiments, the plurality of preset data types may include the fin type, the wt type, and the fout type, but do not include the sumin type. In this case, calculation logic (that is, convolution calculation logic) reflected in the following formula F2=F1*W can be implemented through the collaborative work of the address generation unit, the data access and storage module, the on-chip memory, and the calculation array.

In some optional implementations of this disclosure, that the check operation module 30 is configured to perform a preset check operation on the first target information to obtain a target check code associated with the first configuration instruction may include that:

the check operation module 30 is configured to perform preset check operations on the first target information respectively corresponding to the plurality of preset data types, to obtain target check codes respectively corresponding to the plurality of preset data types.

Taking the plurality of preset data types including the fin type, the wt type, the fout type, and the sumin type as an example, the check operation module 30 may concurrently perform preset check operations on the address sequences respectively corresponding to the fin type, the wt type, the fout type, and the sumin type, so as to obtain the target check codes respectively corresponding to the fin type, the wt type, the fout type, and the sumin type. In an example, as shown in FIG. 2, the check operation module 30 may include four check operation submodules 301, which respectively are a check operation submodule 301 configure to perform a preset check operation on the address sequence corresponding to the fin type, a check operation submodule 301 configure to perform a preset check operation on the address sequence corresponding to the wt type, a check operation submodule 301 configure to perform a preset check operation on the address sequence corresponding to the fout type, and a check operation submodule 301 configure to perform a preset check operation on the address sequence corresponding to the sumin type. The four check operations submodule 301 may run concurrently, thus helping improve efficiency of detecting the functional abnormality of the protected module 20.

In some embodiments, the check operation module 30 may also perform the preset check operations on the address sequences respectively corresponding to the fin type, the wt type, the fout type, and the sumin type, sequentially. For example, a preset check operation may be performed on the address sequence corresponding to the fin type first; and then a preset check operation may be performed on the address sequence corresponding to the wt type; subsequently, a preset check operation may be performed on the address sequence corresponding to the fout type; and finally, a preset check operation may be performed on the address sequence corresponding to the sumin type. Optionally, during the process of performing the preset check operation on the address sequence corresponding to the fin type, a currently generated address belonging to another address sequence may be stored. In this way, preset check operations may be performed on other address sequences based on the stored result in the future.

In some optional implementations of this disclosure, that the functional safety detection module 40 is configured to determine a first functional safety detection result of the protected module 20 based on the reference check code and the target check code may include that:
the functional safety detection module 40 is configured to determine the first functional safety detection result based on the reference check codes respectively corresponding to the plurality of preset data types and the target check codes respectively corresponding to the plurality of preset data types.

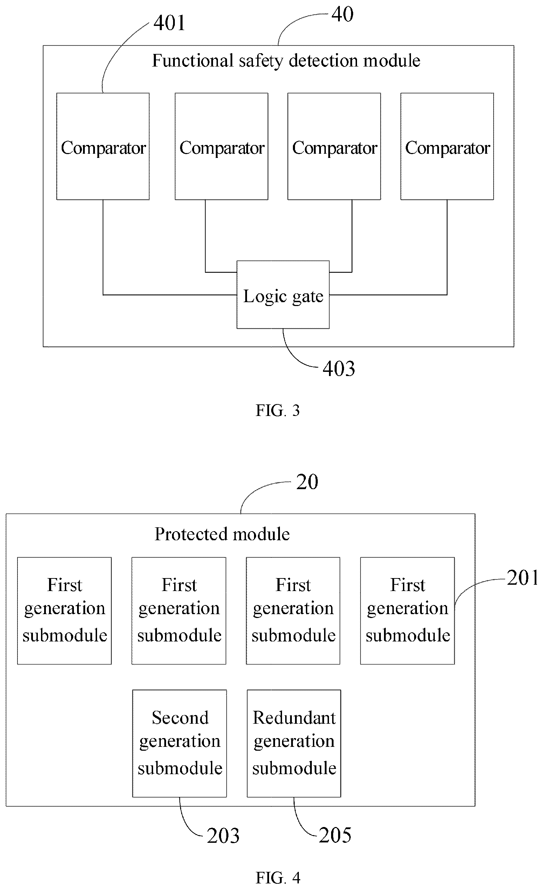

Optionally, as shown in FIG. 3, the functional safety detection module 40 may include:
a plurality of comparators 401, each of which is configured to compare the target check code corresponding to each preset data type with the corresponding reference check code, to obtain a comparison result signal; and
a logic gate 403, which is configured to perform preset logical operations on comparison result signals respectively corresponding to the plurality of preset data types, to obtain an operation result signal for representing the first functional safety detection result.

Optionally, the plurality of comparator 401 may be in one-to-one correspondence to the plurality of preset data types. The comparator 401 corresponding to any preset data type may be electrically connected to the check operation submodule 301 corresponding to that preset data type, so as to receive the target check code from that check operation submodule 301.

In specific implementation, the comparator 401 corresponding to any preset data type may compare the target check code corresponding to that preset data type with the reference check code corresponding to that preset data type, to obtain a comparison result signal corresponding to that preset data type. Optionally, if the comparison result signal corresponding to this preset data type is a low-level signal, it indicates that the target check code corresponding to this preset data type is consistent with the reference check code corresponding to this preset data type. If the comparison result signal corresponding to this preset data type a high-level signal, it indicates that the target check code corresponding to this preset data type is inconsistent with the reference check code corresponding to this preset data type.

Optionally, the logic gate 403 may be an OR gate, and correspondingly, a preset logic operation may be an OR operation. The logic gate 403 may include a plurality of input ends. The plurality of input ends may be electrically connected to the plurality of comparator 401 in one-to-one correspondence, so that through the plurality of input ends, the logic gate 403 may obtain the comparison result signals respectively corresponding to the plurality of preset data types. Because the preset logic operation is an OR operation, if at least one of the comparison result signals respectively corresponding to the plurality of preset data types is a high-level signal, the operation result signal obtained by the logic gate 403 is a high-level signal, which may indicate that the protected module 20 has a functional abnormality. If all the comparison result signals respectively corresponding to the plurality of preset data types are low-level signals, the operation result signal obtained by the logic gate 403 is a low-level signal, which may indicate that the protected module 20 has no functional abnormalities.

In some embodiments, for the comparator 401 corresponding to any preset data type, the high-level signal generated by this comparator 401 may also be used to indicate that the target check code corresponding to this preset data type is consistent with the reference check code corresponding to this preset data type, and the low-level signal generated by this comparator 401 may be used to indicate that the target check code corresponding to this preset data type is inconsistent with the reference check code corresponding to this preset data type, provided that a type of the logic gate 403 is adaptively adjusted. For example, the logic gate 403 may be an AND gate. In this case, if at least one of the comparison result signals respectively corresponding to the plurality of preset data types is a low-level signal, the operation result signal obtained by the logic gate 403 is a low-level signal, which may indicate that the protected module 20 has a functional abnormality.

In view of the above, the functional safety detection module 40 may only include a small quantity of comparators 401 and logic gates 403. Thus, the functional abnormality of the protected module 20 may be detected by using a relatively simple circuit structure with relatively small costs, thereby implementing functional safety protection for the protected module 20.

In some optional implementations of this disclosure, if the protected module 20 is an address generation unit, as shown in FIG. 2 and FIG. 4, the address generation unit may include:
a plurality of first generation submodules 201, which are in one-to-one correspondence to the plurality of preset data types, wherein the first generation submodule 201 corresponding to each of the preset data types is configured to generate the address sequence corresponding to that preset data type based on the configuration information corresponding o that preset data type.

The first functional safety detection result is used to indicate the first generation submodule 201 with a functional abnormality among the plurality of first generation submodules 201.

In an example, the plurality of first generation submodules 201 may be four first generation submodules 201, which respectively are a first generation submodule 201 configured to generate the address sequence corresponding to the fin type based on the configuration information corresponding to the fin type, a first generation submodule 201 configured to generate the address sequence corresponding to the wt type based on the configuration information corresponding to the wt type, a first generation submodule 201 configured to generate the address sequence corresponding to the fout type based on the configuration information corresponding to the fout type, and a first generation submodule 201 configured to generate the address sequence corresponding to the sumin type based on the configuration information corresponding to the sumin type. If the comparison result signal obtained by the comparator 401 corresponding to the fin type indicates that the reference check code and the target check code corresponding to the fin type are inconsistent, it may be determined that the first generation submodule 201 configured to generate the address sequence corresponding to the fin type has a functional abnormality. If the comparison result signal obtained by the comparator 401 corresponding to the wt type indicates that the reference check code and the target check code corresponding to the wt type are inconsistent, it may be determined that the first generation submodule 201 configured to generate the address sequence corresponding to the wt type has a functional abnormality. In this way, the first functional safety detection result may be used to indicate the first generation submodule 201 with a functional abnormality among the plurality of first generation submodules 201.

In this implementation, the first functional safety detection result may not only be used to indicate whether the protected module 20 has a functional exception, but also to indicate a specific component with a functional abnormality in the protected module 20. To be specific, the first functional safety detection result can have relatively large granularity, thereby better meeting practical requirements. For example, based on the first functional safety detection result, fault repair may be purposely performed on the first generation submodule 201 with a functional abnormality.

In the embodiments of this disclosure, the reference check codes respectively corresponding to the plurality of preset data types may be generated in advance by using the software module. In addition, the first target information respectively corresponding to the plurality of preset data types may be generated by using the protected module 20, for determining the target check codes respectively corresponding to the plurality of preset data types. By comparing the target check codes respectively corresponding to the plurality of preset data types with the reference check codes respectively corresponding to the plurality of preset data types one by one, the first functional safety detection result can be obtained efficiently and reliably, thereby implementing functional safety detection for the protected module 20.

In some embodiments, there may also be only one reference check code and target check code. For example, the first target information respectively corresponding to the plurality of preset data types may be generated synchronously (for example, when an i^{th} address in a certain address sequence is generated, i^{th} addresses in other address sequences are generated synchronously). A concatenation result may be obtained by concatenating the first target information respectively corresponding to the plurality of preset data types, and the target check code may be obtained by performing a preset check operation on the concatenation result. The reference check code may be obtained in a similar way, and details are not described herein.

In some optional examples, the configuration module 10 is also configured to obtain a second configuration instruction. As shown in FIG. 4, the protected module 20 may include:
a second generation submodule 203, which is configured to generate second target information based on the second configuration instruction; and
a redundant generation submodule 205 corresponding to the second generation submodule 203, where the redundant generation submodule 205 is configured to generate third target information based on the second configuration instruction.

The functional safety detection module 40 is further configured to determine a second functional safety detection result of the protected module 20 based on the second target information and the third target information.

Optionally, the configuration module 10 may be configured to obtain the second configuration instruction generated for the protected module 20 by the compiler. The second configuration instruction may be different from the first configuration instruction. Specifically, the first configuration instruction may be configuration information related to the generation of the address sequence. The second configuration instruction may be configuration information related to generation of other information except the address sequence. The other information except the address sequence may be control related information.

The configuration module 10 may transmit the second configuration instruction to the protected module 20. The second configuration instruction may carry a second basic parameter for guiding information generation, and a generation rule may be pre-built in the second generation submodule 203. The second generation submodule 203 may generate the second target information based on the second basic parameter and the generation rule pre-built in the second generation submodule 203. The redundant generation submodule 205 may generate information in a way similar to that of the second generation submodule 203, so as to obtain the third target information.

The protected module 20 may transmit the second target information and the third target information to the functional safety detection module 40. The functional safety detection module 40 may compare the second target information with the third target information. If the second target information is consistent with the third target information, the functional safety detection module 40 may obtain a second functional safety detection result indicating that there are no functional abnormalities in the second generation submodule 203 and the redundant generation submodule 205. If the second target information is inconsistent with the third target information, the functional safety detection module 40 may obtain a second functional safety detection result indicating that there is a functional abnormality in at least one of the second generation submodule 203 and the redundant generation submodule 205.

Optionally, a data processing module may be disposed between the data access and storage module and the calculation array, and the data processing module may be used for data remapping, transformation, and other processing. The data access and storage module may first transmit the input feature data, the input weight data, and the like to the data processing module, which may perform remapping, transformation, and other processing on these data, and then transmit a processing result to the calculation array for calculation. If the functional safety detection module 40 obtains the second functional safety detection result for indicating that there are no functional abnormalities in the second generation submodule 203 and the redundant generation submodule 205, the second target information or the third target information may be provided to the data processing module. The second target information or the third target information may be control related information. Based on these information, the data processing module may determine how to reuse (such as reuse times and a reuse sequence) data corresponding to each input point in the input feature data. Similarly, the data processing module may also determine how to reuse each weight value in the input weight data. On this basis, an appropriate manner may be used to process the input feature data and the input weight data, thereby ensuring a processing effect.

In the embodiments of this disclosure, for a generation submodule (such as the first generation submodule 201) in the protected module 20 that is suitable for detecting a functional abnormality by introducing a preset check operation, whether this generation submodule has a functional abnormality may be determined based on whether the reference check code is consistent with the target check code. For another generation submodule (such as the second generation submodule 203), whether the another generation submodule has a functional abnormality may be determined through a redundancy scheme (that is, by introducing the redundant generation submodule 205). In this way, the functional abnormality in the protected module 20 may be comprehensively detected, which helps ensure a functional safety protection effect for the protected module 20.

In some optional examples, as shown in FIG. 2, the configuration module 10 may transmit the first configuration instruction to the protected module 20, which may generate four address sequences based on the first configuration instruction. The check operation module 30 may perform CRC operations on the four address sequences separately to obtain target check codes respectively corresponding to the four address sequences, thereby obtaining four target check codes. The check operation module 30 may transmit the four target check codes to the functional safety detection module 40. In addition, the configuration module 10 may transmit four reference check codes to the functional safety detection module 40. The functional safety detection module 40 may compare the four target check codes with the four reference check codes in one-to-one correspondence, to determine whether the protected module 20 has a functional abnormality. If the protected module 20 has a functional exception, the functional safety detection module 40 may output an abnormality prompt.

It should be noted that the foregoing description is made mainly by using an example in which the protected module 20 is an address generation unit. In specific implementation, the protected module 20 may be an address index generation module rather than an address generation unit. A generation rule related to generation of the index information may be built in the address index generation module, which may obtain a basic parameter related to the generation of the index information from the first configuration instruction, and may generate the index information based on the obtained basic parameter and the generation rule built in the address index generation module, to obtain an index sequence (which may be used as the first target information).

Optionally, the address index generation module may generate four index sequences, which specifically are index sequences respectively corresponding to the fin type, the wt type, the fout type, and the sumin type. Each index in the index sequence corresponding to the fin type may be an index used to determine an address corresponding to an input point in the input feature data. Each index in the index sequence corresponding to the wt type may be an index used to determine an address of one weight value in the input weight data. Each index in the index sequence corresponding to the sumin type may be an index used to determine an address of one residual value in the residual data. Each index in the index sequence corresponding to the fout type may be an index used to determine an address corresponding to one output point in the output feature data.

The address index generation module may transmit all the four index sequences to the address generation unit. The address generation unit may generate the address sequence corresponding to the fin type based on the index sequence corresponding to the fin type. Similarly, the address generation unit may also generate the address sequences respectively corresponding to the wt type, the fout type, and the sumin type based on the index sequences respectively corresponding to the wt type, the fout type, and the sumin type. In this way, the address generation unit generates four address sequences, and the data access and storage module may perform data reading and writing based on the four address sequences generated by the address generation unit.

In view of the above, by using the functional safety protection circuit provided in the embodiments of this disclosure, the functional abnormality of the protected module 20 can be detected by using a relatively simple circuit structure with relatively small area overhead and power consumption, thereby implementing functional safety protection for the protected module 20.

An embodiment of this disclosure further provides a chip, including the functional safety protection circuit according to any one of the foregoing embodiments.

As the functional safety protection circuit can achieve the foregoing technical effects, the chip including the functional safety protection circuit can also achieve the corresponding technical effects. Details are not described herein.

### Exemplary method

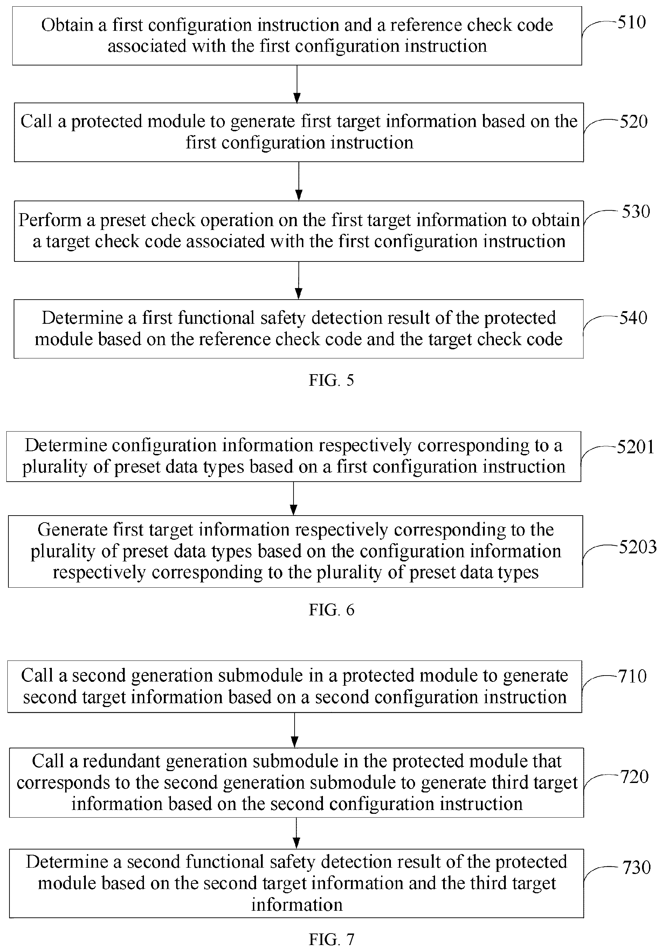

FIG. 5 is a schematic flowchart of a functional safety protection method according to some exemplary embodiments of this disclosure. As shown in FIG. 5, the functional safety protection method may include steps 510, 520, 530, and 540.

Step 510. Obtain a first configuration instruction and a reference check code associated with the first configuration instruction.

Step 520. Call a protected module to generate first target information based on the first configuration instruction.

Step 530. Perform a preset check operation on the first target information to obtain a target check code associated with the first configuration instruction.

Step 540. Determine a first functional safety detection result of the protected module based on the reference check code and the target check code.

In some optional examples, the reference check code associated with the first configuration instruction includes reference check codes respectively corresponding to a plurality of preset data types.

As shown in FIG. 6, step 520 may include steps 5201 and 5203.

Step 5201. Determine configuration information respectively corresponding to the plurality of preset data types based on the first configuration instruction.

Step 5203. Generate the first target information respectively corresponding to the plurality of preset data types based on the configuration information respectively corresponding to the plurality of preset data types.

In some optional examples, step 530 may include:
performing preset check operations on the first target information respectively corresponding to the plurality of preset data types, to obtain target check codes respectively corresponding to the plurality of preset data types.

In some optional examples, step 540 may include:
determining a first functional safety detection result based on the reference check codes respectively corresponding to the plurality of preset data types and the target check codes respectively corresponding to the plurality of preset data types.

In some optional examples, the protected module is an address generation unit, and the plurality of preset data types include at least two of a type of input feature data, a type of input weight data, a type of output feature data, and a type of residual data.

Step 5203 may include:
generating corresponding address sequences respectively for the plurality of preset data types based on the configuration information respectively corresponding to the plurality of preset data types, wherein generation rules of the address sequences are different from each other.

In some optional examples, the address generation unit includes a plurality of first generation submodules, which are in one-to-one correspondence to the plurality of preset data types.

Step 5203 may include:
calling the first generation submodule corresponding to each preset data type to generate the address sequence corresponding to this preset data type based on the configuration information corresponding to this preset data type, wherein the generation rules of the address sequences are different from each other.

In some optional examples, as shown in FIG. 7, the method provided in the embodiments of this disclosure may further include steps 710, 720, and 730.

Step 710. Call a second generation submodule in the protected module to generate second target information based on a second configuration instruction.

Step 720. Call a redundant generation submodule in the protected module that corresponds to the second generation submodule to generate third target information based on the second configuration instruction.

Step 730. Determine a second functional safety detection result of the protected module based on the second target information and the third target information.

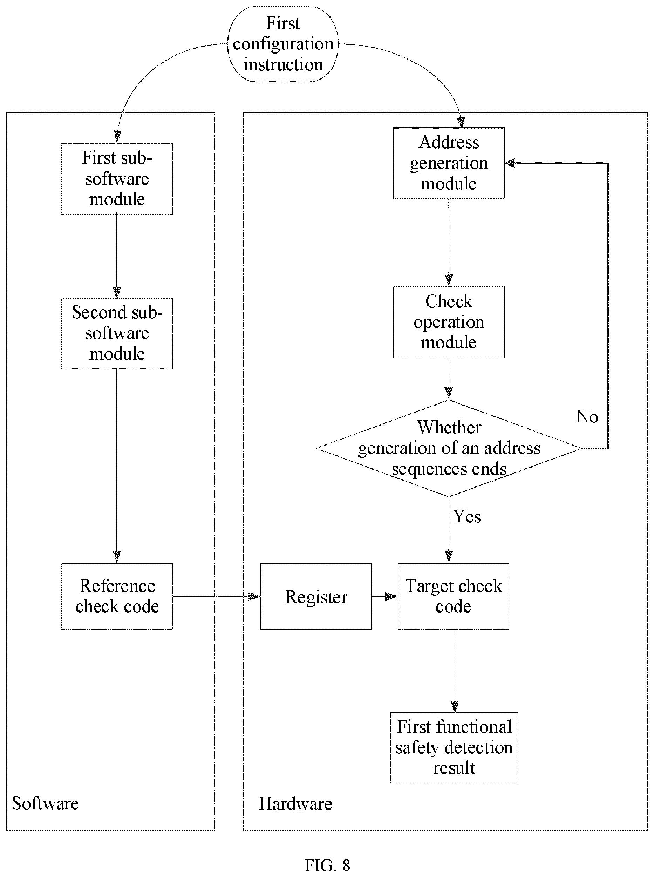

In some optional examples, as shown in FIG. 8, the chip may include a software module and a hardware module. The software module may include a first sub-software module and a second sub-software module. The hardware module may include an address generation unit, a check operation module, a register, and a functional safety detection module.

The first sub-software module may generate four address sequences based on the first configuration instruction. The second sub-software module may obtain four reference check codes by performing preset check operations on the four address sequences generated by the first sub-software module. The four reference check codes may be stored in the register.

The address generation unit may generate the address sequences based on the first configuration instruction. If the generation of the address sequences ends, the check operation module may obtain four target check codes in one-to-one correspondence to the four address sequences generated by the address generation unit.

The functional safety detection module may compare the four target check codes with the four reference check codes one by one, to determine whether the address generation unit has a functional exception, thereby obtaining the first functional safety detection result.

In the method in this disclosure, various optional embodiments, optional implementations, and optional examples in the section of exemplary circuit described above may be flexibly selected and combined according to requirements, so as to implement corresponding functions and effects. These are not enumerated in this disclosure.

For beneficial technical effects corresponding to the exemplary embodiments of this method, reference may be made to the corresponding beneficial technical effects in the section of exemplary method described above, and details are not described herein again.

### Exemplary electronic device

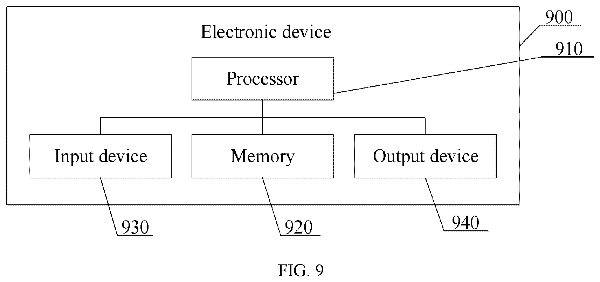

FIG. 9 is a block diagram of an electronic device according to an embodiment of this disclosure. An electronic device 900 includes one or more processors 910 and a memory 920.

The processor 910 may be a central processing unit (CPU) or another form of processing unit having a data processing capability and/or an instruction execution capability, and may control other components in the electronic device 900 to implement desired functions.

The memory 920 may include one or more computer program products, which may include various forms of computer readable storage media, such as a volatile memory and/or a non-volatile memory. The volatile memory may include, for example, a random access memory (RAM) and/or a cache. The nonvolatile memory may include, for example, a read-only memory (ROM), a hard disk, and a flash memory. One or more computer program instructions may be stored on the computer readable storage medium. The processor 910 may execute one or more of the program instructions to implement the method according to the various embodiments of this disclosure that are described above and/or other desired functions.

In an example, the electronic device 900 may further include an input device 930 and an output device 940. These components are connected to each other through a bus system and/or another form of connection mechanism (not shown).

The input device 930 may further include, for example, a keyboard and a mouse.

The output device 940 may output various information to the outside, and may include, for example, a display, a speaker, a printer, a communication network, and a remote output device connected to the communication network.

Certainly, for simplicity, FIG. 9 shows only some of components in the electronic device 900 that are related to this disclosure, and components such as a bus and an input/output interface are omitted. In addition, according to specific application situations, the electronic device 900 may further include any other appropriate components.

### Exemplary computer program product and computer readable storage medium

In addition to the foregoing method and device, embodiments of this disclosure may also relate to a computer program product, which includes computer program instructions. When the instructions are run by a processor, the processor is enabled to perform the steps, of the method according to the embodiments of this disclosure, that are described in the "Exemplary method" section of this specification.

The computer program product may be program code, written with one or any combination of a plurality of programming languages, that is configured to perform the operations in the embodiments of this disclosure. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, the embodiments of this disclosure may further relate to a computer readable storage medium, which stores computer program instructions. When the computer program instructions are run by the processor, the processor is enabled to perform the steps, of the method according to the embodiments of this disclosure, that are described in the "Exemplary method" section of this specification.

The computer readable storage medium may be one readable medium or any combination of a plurality of readable media. The readable medium may be a readable signal medium or a readable storage medium. The readable storage medium may include, for example but is not limited to electricity, magnetism, light, electromagnetism, infrared ray, or a semiconductor system, an apparatus, or a device, or any combination of the above. More specific examples (a non-exhaustive list) of the readable storage medium include: an electrical connection with one or more conducting wires, a portable disk, a hard disk, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above.

Basic principles of this disclosure are described above in combination with specific embodiments. However, advantages, superiorities, and effects mentioned in this disclosure are merely examples but are not for limitation, and it cannot be considered that these advantages, superiorities, and effects are necessary for each embodiment of this disclosure. Specific details described above are merely for examples and for ease of understanding, rather than limitations. The details described above do not limit that this disclosure must be implemented by using the foregoing specific details.

A person skilled in the art may make various modifications and variations to this disclosure without departing from the spirit and the scope of this application. In this way, if these modifications and variations of this application fall within the scope of the claims and equivalent technologies of the claims of this disclosure, this disclosure also intends to include these modifications and variations.

## Claims

1. A functional safety protection circuit, **characterized in that** the functional safety protection circuit comprises:
a configuration module (10), wherein the configuration module (10) is configured to obtain a first configuration instruction and a reference check code associated with the first configuration instruction;
a protected module (20), wherein the protected module (20) is configured to generate first target information based on the first configuration instruction;
a check operation module (30), wherein the check operation module (30) is configured to perform a preset check operation on the first target information to obtain a target check code associated with the first configuration instruction; and
a functional safety detection module (40), wherein the functional safety detection module (40) is configured to determine a first functional safety detection result of the protected module (20) based on the reference check code and the target check code.

2. The functional safety protection circuit according to claim 1, wherein the reference check code associated with the first configuration instruction comprises reference check codes respectively corresponding to a plurality of preset data types; and
that the protected module (20) is configured to generate first target information based on the first configuration instruction comprises that:
the protected module (20) is configured to determine configuration information respectively corresponding to the plurality of preset data types based on the first configuration instruction, and generate the first target information respectively corresponding to the plurality of preset data types based on the configuration information respectively corresponding to the plurality of preset data types.

3. The functional safety protection circuit according to claim 2, wherein that the check operation module (30) is configured to perform a preset check operation on the first target information to obtain a target check code associated with the first configuration instruction comprises that:
the check operation module (30) is configured to perform preset check operations on the first target information respectively corresponding to the plurality of preset data types, to obtain target check codes respectively corresponding to the plurality of preset data types.

4. The functional safety protection circuit according to claim 3, wherein that the functional safety detection module (40) is configured to determine a first functional safety detection result of the protected module (20) based on the reference check code and the target check code comprises that:
the functional safety detection module (40) is configured to determine the first functional safety detection result based on the reference check codes respectively corresponding to the plurality of preset data types and the target check codes respectively corresponding to the plurality of preset data types.

5. The functional safety protection circuit according to claim 4, wherein the functional safety detection module (40) comprises:
a plurality of comparators (401), each of which is configured to compare the target check code corresponding to each preset data type with the corresponding reference check code, to obtain a comparison result signal; and
a logic gate (403), which is configured to perform preset logical operations on comparison result signals respectively corresponding to the plurality of preset data types, to obtain an operation result signal for representing the first functional safety detection result.

6. The functional safety protection circuit according to claim 2, wherein the protected module (20) is an address generation unit, and the plurality of preset data types comprise at least two of a type of input feature data, a type of input weight data, a type of output feature data, and a type of residual data; and that the protected module (20) is configured to generate the first target information respectively corresponding to the plurality of preset data types based on the configuration information respectively corresponding to the plurality of preset data types comprises that:
the address generation unit is configured to generate corresponding address sequences respectively for the plurality of preset data types based on the configuration information respectively corresponding to the plurality of preset data types, wherein generation rules of the address sequences are different from each other.

7. The functional safety protection circuit according to claim 6, wherein the address generation unit comprises:
a plurality of first generation submodules (201), which are in one-to-one correspondence to the plurality of preset data types, wherein the first generation submodule (201)corresponding to each of the preset data types is configured to generate the address sequence corresponding to that preset data type based on the configuration information corresponding to that preset data type, wherein
the first functional safety detection result is used to indicate the first generation submodule (201) with a functional abnormality among the plurality of first generation submodules (201).

8. The functional safety protection circuit according to any one of claims 1 to 7, wherein the configuration module (10) is further configured to obtain a second configuration instruction, and the protected module (20) comprises:
a second generation submodule (203), which is configured to generate second target information based on the second configuration instruction; and
a redundant generation submodule (205) corresponding to the second generation submodule (203), wherein the redundant generation submodule (205) is configured to generate third target information based on the second configuration instruction, wherein
the functional safety detection module (40) is further configured to determine a second functional safety detection result of the protected module (20) based on the second target information and the third target information.

9. A chip, **characterized in that** the chip comprises the functional safety protection circuit according to any one of claims 1 to 8.

10. A functional safety protection method, **characterized in that** the functional safety protection method comprises:
obtaining (510) a first configuration instruction and a reference check code associated with the first configuration instruction;
calling (520) a protected module (20) to generate first target information based on the first configuration instruction;
performing (530) a preset check operation on the first target information to obtain a target check code associated with the first configuration instruction; and
determining (540) a first functional safety detection result of the protected module (20) based on the reference check code and the target check code.

11. The method according to claim 10, further comprises:
calling (710) a second generation submodule (203) in the protected module (20) to generate second target information based on a second configuration instruction;
calling (720) a redundant generation submodule (205) in the protected module (20) that corresponds to the second generation submodule (203) to generate third target information based on the second configuration instruction; and
determining (730) a second functional safety detection result of the protected module (20) based on the second target information and the third target information.

12. The method according to claim 10, wherein the calling (520) a protected module (20) to generate first target information based on the first configuration instruction comprises:
determining (5201) configuration information respectively corresponding to the plurality of preset data types based on the first configuration instruction; and
generating (5203) the first target information respectively corresponding to the plurality of preset data types based on the configuration information respectively corresponding to the plurality of preset data types.

13. The method according to claim 10, wherein the performing (530) a preset check operation on the first target information to obtain a target check code associated with the first configuration instruction comprises:
performing preset check operations on the first target information respectively corresponding to the plurality of preset data types, to obtain target check codes respectively corresponding to the plurality of preset data types.

14. A computer readable storage medium, wherein the storage medium stores a computer program, and the computer program is used for implementing the functional safety protection method according to any one of claims 10-13.

15. An electronic device (900), **characterized in that** the electronic device (900) comprises:
a processor (910); and
a memory (920), configured to store processor-executable instructions, wherein
the processor (910) is configured to read the executable instructions from the memory (920), and execute the instructions to implement the functional safety protection method according to any one of claims 10-13.
